# EUROPEAN PATENT SPECIFICATION

(11) **EP 2 449 372 B1**
(45) Date of publication and mention of the grant of the patent: **27.12.2017**
(21) Application number: 09780016.3
(22) Date of filing: 30.06.2009
(51) Int. Cl.: G01N 30/24, G01N 30/86, G01N 30/88

(54) **LIQUID CHROMATOGRAPHY ADJUSTMENT FOR METHOD-CONFORMALLY COMPENSATING DEVIATIONS FROM IDEAL BEHAVIOR**
FLÜSSIGCHROMATOGRAFIEEINSTELLUNG ZUR METHODENKONFORMEN KOMPENSATION VON ABWEICHUNGEN VOM IDEALVERHALTEN
AJUSTEMENT D'UN DISPOSITIF DE CHROMATOGRAPHIE EN PHASE LIQUIDE POUR COMPENSER LES ÉCARTS PAR RAPPORT À UN COMPORTEMENT IDÉAL TOUT EN RESTANT CONFORME AU PROCÉDÉ

(43) Date of publication of application: 09.05.2012
(73) Proprietor: Agilent Technologies, Inc., Santa Clara, California 95051 (US)
(72) Inventor: CHOIKHET, Konstantin, 76237 Waldbronn (DE); WITT, Klaus, 76237 Waldbronn (DE)
(74) Representative: Dilg, Haeusler, Schindelmann Patentanwaltsgesellschaft mbH
(86) International application number: PCT/EP2009/058152
(87) International publication number: WO 2011/000407

(56) References cited:
- WO-A1-2008/028974
- DE-A1- 4 204 853
- US-A1- 2003 110 000
- US-A1- 2009 076 631
- MACLEOD ET AL: "Compensated delay volume as an approach to improve the inter-laboratory transferability of gradient high-performance liquid chromatographic assays" JOURNAL OF CHROMATOGRAPHY, ELSEVIER SCIENCE PUBLISHERS B.V, NL, vol. 540, 1 January 1991 (1991-01-01), pages 373-375, XP026514900 ISSN: 0021-9673 [retrieved on 1991-01-01]
- DOLAN J W ET AL: "Variability of column selectivity for reversed-phase high-performance liquid chromatography - Compensation by adjustment of separation conditions" JOURNAL OF CHROMATOGRAPHY, ELSEVIER SCIENCE PUBLISHERS B.V, NL, vol. 960, no. 1-2, 25 June 2002 (2002-06-25), pages 51-67, XP004366181 ISSN: 0021-9673

## Description

### BACKGROUND ART

The present invention relates to the operation of liquid chromatography devices.

In liquid chromatography, a fluidic analyte may be pumped through a column comprising a material which is capable of separating different components of the fluidic analyte. Such a material, so-called beads, may be filled into a column tube which may be connected to other elements (like a control unit, containers including sample and/or buffers). Upstream of a column, the fluidic analyte is loaded into the liquid chromatography device. A controller controls an amount of fluid to be pumped through the liquid chromatography device, including controlling a composition and time-dependency of a solvent interacting with the fluidic analyte. Such a solvent may be a mixture of different constituents. The supply of these constituents for subsequent mixing is an example of an operation to be designed by an operator of a liquid chromatography device.

A chromatographic method to be executed by a liquid chromatography device can be defined by a set of target parameters and by a corresponding target sequence of operation procedures. Such a chromatographic method, for instance for pharmaceutical applications, may have to be certified by an official authority such as the FDA (Food and Drug Administration) in the United States of America.

US 5,987,959 discloses a method for automated matching of retention times obtained using a known chromatographic method having a defined set of column parameters and operating parameters to the retention times obtained using a new chromatographic method having a new set of column parameters, wherein the retention times of components separated in accordance with the new chromatographic method are matched to the retention times set forth in the known chromatographic methods. A procedure is described to adjust head pressure to compensate for differences in a new versus the original column, carrier gas, and column outlet pressure of the known method.

US 7,475,050 discloses a system for developing an analytical device method, said system comprising a method developer module, wherein said method developer module automatically develops a complete analytical device method based on a user provided analytical device method parameter.

DE 42 04 853 A1 (HITACHI LTD, 20-08-1992) discloses a method of making a chromatography analysis of samples and a system employing the same, wherein a known reference sample is used for calibrating said system.

Document "Variability of column selectivity for reversed-phase high-performance liquid chromatography - Compensation by adjustment of separation conditions" (DOLAN J W ET AL, JOURNAL OF CHROMATOGRAPHY, ELSEVIER SCIENCE PUBLISHERS B.V, NL, vol. 960, no. 1-2, 25 June 2002, pages 51-67, ISSN: 0021-9673) discloses a method for compensating differences in column selectivity, wherein compensation is carried out based on retention times.

However, conventional operation of a liquid chromatography device may lack sufficient precision.

### DISCLOSURE

It is an object of the invention to enable an accurate operation of a liquid chromatography device. The object is solved by the independent claims 1 and 13. Further embodiments are shown by the dependent claims.

According to an exemplary embodiment, a liquid chromatography device being controllable for executing a chromatographic method defined by a set of target parameters and by a corresponding target sequence of operation procedures is provided, the device comprising a method execution unit configured for executing the chromatographic method by applying the set of target parameters and by running the corresponding target sequence of operation procedures within the liquid chromatography device, a determining unit configured for determining a deviation of an actual result of the chromatographic method from an expected target result, wherein the expected target result of the chromatographic method represents a desired behavior of the liquid chromatography device and wherein the actual result of the chromatographic method is obtained by executing the chromatographic method and represents an actual behavior of the liquid chromatography device, and an adjusting unit configured for adjusting at least one operation property of the liquid chromatography device based on the determined deviation to thereby at least partially compensate a difference between the expected target result and the actual result while maintaining the chromatographic method unchanged.

According to still another exemplary embodiment, a process of operating a liquid chromatography device is provided, the liquid chromatography device being programmed for executing a chromatographic method defined by a set of target parameters and by a corresponding target sequence of operation procedures, wherein the claimed process comprises executing the chromatographic method by applying the set of target parameters and by running the corresponding target sequence of operation procedures within the liquid chromatography device, determining a deviation of an actual result of the chromatographic method from an expected target result, wherein the expected target result of the chromatographic method represents a desired behavior of the liquid chromatography device and the actual result of the chromatographic method is obtained by executing the chromatographic method and represents an actual behavior of the liquid chromatography device, and adjusting at least one operation property of the liquid chromatography device based on the determined deviation to thereby at least partially compensate a difference between the expected target result and the actual result while maintaining the chromatographic method unchanged.

According to still another exemplary embodiment of the present invention, a software program or product is provided, preferably stored on a data carrier, for controlling or executing the process having the above mentioned features, when run on a data processing system such as a computer.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in the context of measurement management. The measurement management scheme according to an embodiment of the invention can be performed or assisted by a computer program, i.e. by software, or by using one or more special electronic optimization circuits, i.e. in hardware, or in hybrid form, i.e. by means of software components and hardware components.

The term "chromatographic method" may particularly denote a workflow, i.e. an algorithm and a set of numerical parameters, defining as to how a liquid chromatography device is to be operated or run. Such a method may be unambiguously characterized by a target sequence of procedures (or a timetable of executing a sequence of instructions) in combination with a set of target parameters such as a number of numerical values according to which the procedures are to be carried out. Thus, the chromatographic method may include a complete set of data which, when provided to the fluidic device, defines a dedicated analysis to be performed by this fluidic device. For example, the chromatographic method may define a procedure of separating different components of fluids by the fluidic device (for example a recipe as to how to run a liquid chromatography), a procedure of analyzing a medication (for example in a coupled liquid chromatography and mass spectroscopy device in which a metabolism of a drug in a human body may be investigated), a diagnostic procedure (for example for diagnosing a specific physiological condition based on an analysis of a sample), a procedure requiring official approval (for instance an approval procedure before the FDA, Food and Drug Administration, in the United States), a procedure of flushing the device (for example an algorithm according to which a flush solution is supplied for removing traces of fluids from a previous investigation, thereby suppressing undesired crosstalk or contamination), a selection of a solvent for the fluidic device (for instance selecting multiple constituents of such a solvent, their relative concentrations, etc.), a procedure of applying a concentration gradient to the fluidic device (for example to perform a liquid chromatography analysis using a chromatographic column) and/or a selection of an operation temperature (and/or other physical parameters such as pressure) for the fluidic device. For ensuring that an experiment is in accordance with a certified chromatographic method, it may be desirable to keep the method unchanged.

The term "target result" may particularly denote a chromatographic result which an LC device is expected to deliver, i.e. an ideal chromatographic result obtained when executing the fixed chromatographic method in the absence of disturbing experimental influences or measurement artifacts.

In contrast to this, an "actual result" may denote a chromatographic result obtained actually in practice when running a fluidic device in its actual configuration. Such a real operation mode may deviate from the ideal operation mode as a result of real world effects or parasitic effects occurring within the LC configuration when being operated in practice. Such effects may relate to non-zero dead volumes, non-ideal mixing behavior of fluidic conduits, temperature and velocity profile generation due to friction between a fluid and a wall of a surrounding conduit, small leakage, etc. For a precise operation of the device, the difference between target result and real result can be reduced or eliminated according to exemplary embodiments.

The term "operation property" of the liquid chromatography device may particularly denote any experimental or theoretical apparatus parameter which can be adjusted by an operator without manipulating the chromatographic method. In contrast to this, adjustment of an operation property may be performed according to an exemplary embodiment to promote a method-conformal operation. Thus, adjusting an operation parameter does not have the intention or effect that the chromatographic method is manipulated or adjusted, but in contrast to this, parameters which do not form part of the chromatographic method are adjusted so as to approach an actually performed imperfect method towards the theoretically reproduced method. Such operation parameters are, for instance, a driving power of a fluidic pump, the selection of an appropriately dimensioned separation column or the selection of an offset added to a set temperature for the column environment.

According to an exemplary embodiment, a liquid chromatography system may be provided which purely phenomenologically determines the presence or absence of deviations between a theoretically defined chromatographic method and a method which is actually and unmeantly performed under the present environmental conditions. Without caring about a reason or a cause for such a deviation, the system may modify parameters which do not form part of the method but which may have the impact that the target chromatographic method is mimicked more precisely by the actually performed operation of the liquid chromatography device. For example, a known substance may be used for calibrating such a system and may be analyzed experimentally so as to determine an actual result of such a measurement (such as a chromatographic retention time) which can then be compared with a pre-known expected ideal parameter (for instance a retention time at which the known substance is to be expected under ideal conditions). If such a deviation is determined, the correct execution of the method may be promoted by correspondingly adjusting one or more operation parameters of the liquid chromatography device so as to phenomenologically reduce or eliminate the determined deviations.

Next, further exemplary embodiments of the liquid chromatography device will be explained. However, these embodiments also apply to the process and to the software program or product.

The adjusting unit may be configured for adjusting an actual composition of a mobile phase composed by multiple fluidic components (for instance a two-component solvent) based on the determined deviation to thereby at least partially compensate the difference between the expected target result and the actual result while maintaining the chromatographic method unchanged. Such a composition for a mobile phase may be formed as a mixture of multiple solvent components, for instance a mixture of water (component A) and an organic solvent such as Acetonitrile (component B). A deviation between a method to be carried out and an actually carried out method may result from the fact that the actual composition (for example 89.5% component A, 10.5% component B) of such a solvent differs from a method-conformal mixture (for example 90% component A, 10% component B), for instance since under actual conditions the corresponding fluidic pumps do not work with exactly the same performance or a small leak occurs in one of the fluidic channels conducting the fluids to be mixed. Therefore, by compensating operation of the pumps, for instance by adjusting a drive power of one of the pumps, undesired deviations of the solvent composition which can have a strong impact on the retention time and hence on the chromatographic accuracy can be safely prevented. For example, piston operation of such fluid pumps may be correspondingly adjusted to obtain a defined solvent composition and to thereby guarantee correct execution of the chromatographic method.

The chromatographic method may be a fixed chromatographic method. For example, the chromatographic method may be an officially certified method, for example certified by the FDA (Food and Drug Administration). Due to such a certification, manipulation of a method has to be safely prevented. Therefore, exemplary embodiments do not change the method, but may change method independent parameters to properly mimic the fixed method. Such a method independent parameter may be a pressure offset, which is subtracted from every pressure reading to correct for ambient pressure changes.

The expected target result may correspond to a result obtained upon execution of the chromatographic method under predefined standard conditions. Such predefined standard conditions may be external experimental environmental conditions with regard to which a liquid chromatography device may be calibrated, for example at a factory side. For instance, the standard conditions may be 1000 mbar and 20°C. However, if such a liquid chromatography device is exposed to an external temperature of 10°C, this may result in a deviation of the method executed thereon as compared to a set method. For example, thermal expansion of the LC apparatus or a liquid in a bottle may result in such a deviation. Hence, when the experimental conditions differ from predefined standard conditions, this deviation may be compensated for to properly map a method. For example, it is possible that one or more sensors are provided for detecting environmental conditions, such as a temperature sensor, a pressure sensor, a humidity sensor or the like. Using such a sensor result may then allow to compensate for the differences as compared to the standard conditions.

The adjusting unit may be configured for adjusting the at least one operation property of the liquid chromatography device for mapping the chromatographic method relating to predefined standard environmental conditions onto actual environmental conditions. Therefore, a goal of the adjustment may be a better compliance between the actually performed sequence of procedures with certain parameters as compared to the instructions and parameter values according to the given method.

In an embodiment, the adjusting unit may be configured for adjusting the at least one operation property of the liquid chromatography device so as render an actual result obtained upon execution of the chromatographic method basically independent of a change of actual environmental conditions. Therefore, the adjustment may retrace and continuously update changed environmental conditions so as to prevent an impact on the method which should run identically on the LC device regardless of the external parameters.

The at least one operation property of the liquid chromatography device which may be altered may be an adjustable temperature of a compartment holding the separation column (which can be adjusted by correspondingly controlling a temperature adjustment unit), an adjustable type of a separation column (for instance in a configuration in which multiple separation columns are arranged in parallel and one of these columns can be selected by correspondingly operating a fluidic switch), an adjustable pumping rate of a mobile phase drive (by correspondingly adjusting driving force, driving power or piston position of a corresponding fluid pump), an adjustable fluidic flow for solvent composition of a mobile phase (for instance to compensate for a leak or the like), or an adjustable analysis procedure for identifying measurement peaks in a chromatographic spectrum (for instance in a scenario in which a change in the operation conditions results in a deviation of the performed method from the ideal method which can be compensated theoretically by a spectral shift when evaluating a peak of a substance in a chromatogram).

In an embodiment, none of the at least one operation property forms part of the chromatographic method defined by the set of target parameters and by the corresponding target sequence of operation procedures. Manipulating one of those parameters of the chromatographic method would result in the manipulation of the method which may for instance be highly undesired in a scenario of a previously certified method.

The method execution unit may be configured for executing, for calibration purposes, the chromatographic method on the liquid chromatography device using a predefined reference substance. In other words, an LC experiment may be run with a reference sample with known properties to check a degree of conformity of an experiment with a chromatographic method. Still referring to this embodiment, the determining unit may then be configured for determining a deviation between an expected position and an actual position of an analysis peak of the reference substance (or sample) in a chromatographic spectrum (or chromatogram). For example, a known substance with a known retention behavior or, more generally, known chromatographic properties, may be analyzed with the LC device to determine a deviation of an actual retention time from the expected retention time. This deviation may then be interpreted as a fingerprint of imperfections actually occurring when executing the method. For example, the adjusting unit may then be configured for adjusting the at least one operation property (for instance an experimental condition such as a fluid flow of a solvent composition or also a theoretical parameter used during evaluation of a chromatographic spectrum) to lock the actual retention time at the expected position. The expected position can be denoted as the position at which the peak would be visible when the method would be performed in an absolutely correct way, or at least in the very same way as when the chromatographic method was originally developed.

In an embodiment, the adjusting unit may be configured for locking the actual position at the expected position by applying at least one re-scale parameter (or an offset) to the at least one operation property to the expected position. A corresponding re-scale parameter value (or a set of such parameter values) may be stored in the system and may be used to achieve agreement between the theoretically expected method and the actually executed method.

In an embodiment, the adjusting unit may be configured for adjusting the at least one operation property under consideration of an adsorption isotherm. The term "adsorption isotherm" may particularly denote a characteristic curve in a diagram in which a percentage of a solvent composition is plotted along one of the coordinate axes and the retention time is plotted along the other one of the axes. By considering such a characteristic curve and comparing an actual operation point of the LC device with the adsorption isotherm, a corresponding adjustment of the operation property may be performed so as to bring the experimental reality in accordance with the result expected by the adsorption isotherm.

Adjusting the operation property may include adjustment of at least one experimental condition (such as a drive power of a fluidic pump) and/or the adjustment of a theoretical parameter (for instance in the context of evaluating a chromatographic result).

The adjusting unit may particularly be configured for adjusting an elution force of the liquid chromatography device in conformity with the chromatographic method. Such an elution force may be denoted as a force of eluting a trapped fluidic sample from a chromatographic column. Such an elution may be performed by correspondingly adjusting a solvent composition, for instance by performing a predefined gradient run. Such a gradient run may sensitively depend on a solvent composition (which can be gradually changed during the gradient run). If the fluidic pumps do not exactly map a desired gradient behaviour of a method, the solvent composition may be matched to the requirements of the method. If during the method development the fluidic pumps had been operating with a slight offset gradient behavior the adjusting unit may make the actual LC-device to mimic the original offset by shifting the commanded gradient. Hence, such a pump may be accurate, but the expected results may be achieved by performing an adjustment.

The adjusting unit may be configured for calibrating the liquid chromatography device so that when actually executing the chromatographic method, the real parameters are in accordance with the target parameters and an actual target sequence of operation procedures is in accordance with the target sequence of operation procedures. Hence, the goal of the adjustment may be the reduction or even minimization of a deviation between an actually performed method and the fixed chromatographic method.

The adjusting unit may be particularly useful when the chromatographic method requests running pre-mixed solvents (like 15% Acetonitrile in water pre-mixed in the bottle of channel A). Minor mis-adjustments of the pre-mix in the reservoir bottle may shift the peaks in the chromatogram. With the adjusting unit active according to an embodiment the net result may be that the execution counteracts the minor mismatch of the pre-mix. By nature it may be advantageous not to allow huge scales for adjusting (for instance only adjustment below a threshold) because predictable results can usually only be obtained in a window close around the target conditions.

In an embodiment, the calibration procedure may be performed in an iterative manner. In other words, after having changed an operation property, the system may be run again with the modified operation property. If a system performance has improved, i.e. if a deviation from the fixed method has been reduced, the change of the operation properties can be accepted and the operation property may be changed again to further reduce the deviation. If however the change of the operation property has even increased the deviation, the change of the parameter should be rejected and another change may be tried. By such an iterative or trial and error procedure, the system may be subsequently improved regarding performance.

In a chromatographic spectrum, substance peaks can be spread along a time axis, and this spreading may be defined by a plurality of influencing factors, particularly ambient temperature. Such environmental conditions may not only have an impact on the solvent composition but also on the performance of various LC components which may change with temperature, for instance due to thermal expansion or the like. This may conventionally result in problems regarding reproducibility of an LC analysis. In order to address such problems, an exemplary embodiment locks retention times at a desired position, in order to meet a predefined correlation between the individual retention times. Such a phenomenological approach of correcting minor differences has turned out to be more reliable than a conventional analytical approach of recognizing a specific error and eliminating the error by addressing causes of this error. Specifically in a complex LC system, such an analytical approach has turned out to be very difficult in many cases, since many parameters may have a sensitive impact on the retention times. According to an exemplary embodiment, a measurement may be controlled in such a manner that a chromatographic peak is phenomenologically shifted to the right point of time. For instance, this can be achieved by storing an offset parameter in the device which can be constant or can also be changed over time so that the desired result may be achieved. In an embodiment, such an adjustment may be performed in a self-acting manner, so that the user can be prevented from manipulating parameters which could have an impact on a certified method, i.e. which would result to an undesired manipulation of the method.

In an embodiment, a user may operate the LC device in accordance with a predefined method for calibration purposes. Then, a measurement of the actual position of a peak with regard to the target position of a peak can be derived. This can be achieved by performing a measurement with a known substance, with a ladder measurement or a marker measurement or a reference measurement. Under consideration of a model (for instance under consideration of an adsorption isotherm) it is then possible to calculate an offset for the sample in such a manner that the actual position of a measurement peak may be brought in accordance with a target position of such a peak in a chromatogram. For example, when a specific substance appears too late or too early in a chromatographic diagram, this artifact may be eliminated by providing a modified composition of a solvent. Adjusting a corresponding offset may be performed with various methods, for instance implementing a linearly spaced scanning pattern, a binary search pattern, or intuitively interpreting experiments or by performing a mathematical search method.

An example for a liquid chromatography device is an apparatus of the 1100 Series for liquid chromatography (LC) of Agilent Technologies.

A fluidic channel downstream a mixing point at which multiple solvent components are mixed may serve as a separation element filled with a separating material. Such a separating material which may also be denoted as a stationary phase may be any material which allows an adjustable degree of interaction with a sample so as to be capable of separating different components of such a sample. The separating material may be a liquid chromatography column filling material or packing material comprising at least one of the group consisting of polystyrene, zeolite, polyvinylalcohol, polytetrafluorethylene, glass, polymeric powder, silicon dioxide, and silica gel, or any of above with chemically modified (coated, capped etc) surface. However, any packing material can be used which has material properties allowing an analyte passing through this material to be separated into different components, for instance due to different kinds of interactions or affinities between the packing material and fractions of the analyte.

At least a part of the separation element may be filled with a fluid separating material, wherein the fluid separating material may comprise beads having a size in the range of essentially 0.1 µm to essentially 50 µm. Thus, these beads may be small particles which may be filled inside the separation section of the microfluidic device. The beads may have pores having a size in the range of essentially 0.001 µm (for instance if beads of 0.1 µm are used) to essentially 0.2 µm. The fluidic sample may be passed through the pores, wherein an interaction may occur between the fluidic sample and the pores.

The sample separation device may be adapted as a fluid separation system for separating components of the sample. When a mobile phase including a fluidic sample passes through the fluidic device, for instance by applying a high pressure, the interaction between a filling of the column and the fluidic sample may allow for separating different components of the sample, as performed in a liquid chromatography device.

However, the sample separation device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a gel electrophoresis device or a liquid chromatography device), the different samples may be distinguished, and one sample or band of material may be selectively isolated as a purified sample.

The sample separation device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyte, an affinity parameter, or the like. The term "biological parameter" may particularly denote a concentration of a protein, a gene or the like in a biochemical solution, a biological affinity of a component, etc.

The sample separation unit element may be a chromatographic column for separating components of the fluidic sample. Therefore, exemplary embodiments may be particularly implemented in the context of a liquid chromatography apparatus.

The sample separation device may be adapted to conduct a liquid mobile phase through the sample separation element and optionally a further sample separation element. Also materials being mixtures of different phases (solid, liquid, gaseous) may be processed using exemplary embodiments.

The sample separation device may be adapted to conduct the mobile phase through the system with a high pressure, particularly of at least 600 bar, more particularly of at least 1200 bar.

The sample separation device may be adapted as a microfluidic device. The term "microfluidic device" may particularly denote a fluidic device as described herein which allows to convey fluid through microchannels having a dimension in the order of magnitude of less than 500 µm, particularly less than 200 µm, more particularly less than 100 µm or less than 50 µm or less. The sample separation device may also be adapted as a nanofluidic device. The term "nanofluidic device" may particularly denote a fluidic device as described herein which allows to convey fluid through nanochannels having even smaller dimensions than the microchannels.

The adjusting unit may be configured for adjusting the at least one operation property to operate the liquid chromatography device in conformity with the chromatographic method.

The target sequence of operation procedures may define a sequence of instructions according to which the liquid chromatography device is to be operated upon executing the chromatographic method.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.
Fig. 1 shows a sample separation device, in accordance with embodiments of the present invention, e.g. used in high performance liquid chromatography (HPLC).
Fig. 2 shows a liquid chromatography device according to an exemplary embodiment.
Fig. 3 schematically illustrates a diagram and a procedure run by a calibration method according to an exemplary embodiment.
Fig. 4 shows a detailed view of a liquid chromatography device according to an exemplary embodiment.

The illustration in the drawing is schematically.

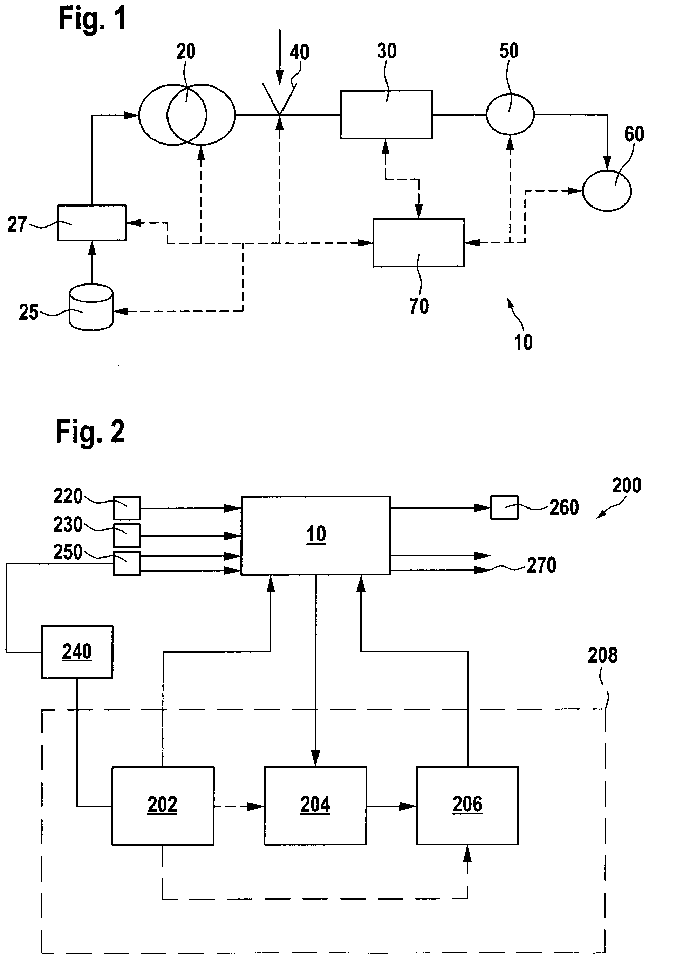

Referring now in greater detail to the drawings, **Fig. 1** depicts a general schematic of a sample separation device 10. A pump 20 - as a mobile phase drive - drives a mobile phase through a separating device 30 (such as a chromatographic column) comprising a stationary phase. A sampling unit 40 can be provided between the pump 20 and the separating device 30 for introducing a sample fluid to the mobile phase. The stationary phase of the separating device 30 is configured for separating compounds of the sample liquid. A detector 50 is provided for detecting separated compounds of the sample fluid. A fractionating unit 60 can be provided for outputting separated compounds of sample fluid.

A data processing unit 70, which can be a PC or workstation, might be coupled (as indicated by the dotted arrows) to one or more of the components in the sample separation device 10 in order to receive information and/or control operation. For example, the data processing unit 70 might control operation of the pump 20 (e.g. setting control parameters) and receive therefrom information regarding the actual working conditions (such as output pressure, flow rate, etc. at an outlet of the pump 20). The data processing unit 70 might also control operation of the sampling unit (e.g. controlling an amount for sampling, controlling sample injection or synchronizing sample injection with operating conditions of the pump 20). The separating device 30 might also be controlled by the data processing unit 70 (e.g. selecting a specific flow path or column, setting operation temperature, etc.), and send - in return - information (e.g. operating conditions) to the data processing unit 70. The data processing unit 70 might also control operation of the solvent supply 25 (e.g. setting the solvent/s or solvent mixture to be supplied) and/or the degasser 27 (e.g. setting control parameters such as vacuum level) and might receive therefrom information regarding the actual working conditions (such as solvent composition supplied overtime, flow rate, vacuum level, etc.). Accordingly, the detector 50 might be controlled by the data processing unit 70, and send information (e.g. about the detected sample compounds) to the data processing unit 70. The data processing unit 70 might also control operation of the fractionating unit 60 (e.g. in conjunction with data received from the detector 50) and provide data back.

**Fig. 2** illustrates a liquid chromatography system 200 according to an exemplary embodiment of the invention.

In the system 200, a sample separation device 10 as shown as Fig. 1 is integrated.

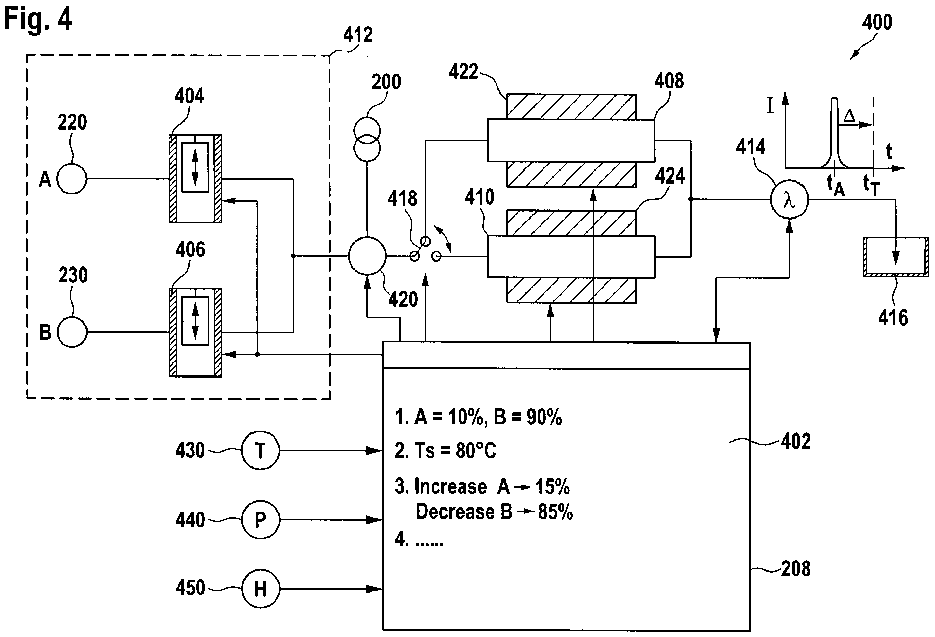

The liquid chromatography system 200 is controllable for executing a fixed chromatographic method which is defined by a set of target parameters and by a corresponding target sequence of operation procedures (compare reference numeral 402 in Fig. 4).

The system 200 comprises a method execution unit 202 configured for executing the chromatographic method by applying the set of target parameters and by running the corresponding target sequence of operation procedures within the liquid chromatographic device 200. As can be taken from Fig. 2, the method execution unit 202 may send one or more control signals to the sample separation device 10.

As can be taken from Fig. 2, the method execution unit 202 may optionally communicate with a determining unit 204. The determining unit 204 is configured for determining a deviation between an actual result of the chromatographic method and an expected target result, wherein the expected target result of the chromatographic method represents a desired behavior of the liquid chromatography device 200. The actual result of the fixed chromatographic method is the result obtained by executing the chromatographic method under given environmental conditions and represents an actual behavior of the liquid chromatography system 200. In other words, the determining unit 204 receives a result from the execution of the fixed chromatographic method on the sample separation device 10, for example receives a chromatogram.

It may now happen that the external conditions under which the liquid chromatography system 200 operates (for instance an ambient temperature which is 5°C and hence deviates significantly from a "standard" temperature of, for instance, 20°C for which the system 200 is designed) result in a deviation between a measured retention time of a known reference sample analyzed with the sample separation device 10 as compared to a default position of such a chromatographic peak in the chromatogram. In other words, although the system 200 tries to execute the given chromatographic method, the latter is not mapped perfectly to the actual reality.

An adjusting unit 206 is in communication with the determining unit 204 (and optionally with the method execution unit 202) and is configured for adjusting at least one operation property of the liquid chromatography device 10 based on the determined deviation to thereby at least partially compensate a difference between the expected target result and the actual result. The compensation of the deviation is however performed in a manner to maintain the chromatographic method unchanged. In other words, only those operation parameters are changed which do not form part of the chromatographic method, but which may contribute to a more appropriate reproduction of the given chromatographic method.

As can be taken from Fig. 2, the adjusting unit 206 may send a feedback signal to the LC device 10 to perform such an adjustment. For example, the adjusting unit 206 may conclude that an experimentally detected shift in the retention time results from a change of the environmental temperature which can be measured by a temperature sensor (not shown in Fig. 2). An algorithm stored in the adjusting unit 206 may then yield the result that, for the given temperature, a thermal expansion of a piston of a mobile phase drive pump (not shown in Fig. 2) delivers a slightly incorrect ratio between a first solvent (such as water taken from a water vial 220) and a second solvent (such as ACN taken from an organic solvent vial 230) and hence does not match the requirements of the chromatographic method exactly. Therefore, the adjustment unit 206 may modify operation of the sample separation device 10, particularly the pump operation thereof, so as to correct for the temperature based artifact of the solvent composition.

As can be taken from Fig. 2, the units 202, 204, 206 may be provided as a single control unit 208 which may be a microprocessor or a central processing unit (CPU). This system 208 may have access to a database 240 such as a mass storage device in which multiple parameters can be stored. For instance, algorithms and parameters may be stored in the memory 240 to which the control unit 208 has access. Therefore, such parameters can be taken from the database 240 for properly calculating changes of the operation properties of the sample separation device 10 to map the desired chromatographic method. It is also possible that one or more offset values determined by the determining unit and/or the adjustment unit 206 may be stored in the database 240, since such offset parameters may be used for compensating the environment based distortions.

Fig. 2 furthermore shows an input/output unit 250 which is a user interface and which is capable of displaying a result of a chromatographic analysis to a user. It is also possible that the input/output unit 250 comprises input elements such as a keypad, buttons, joystick or the like to allow a user to input corresponding parameters, for instance to select a specific chromatographic method to be executed on the sample separation device 10.

Fig. 2 furthermore shows a waste container 260 to which fluids may be drained after termination of an analysis. A chromatogram may be output as output data 270, as shown in Fig. 2 as well.

In the following, some basic recognitions of the present inventors will be explained based on which exemplary embodiments of the invention have been derived.

According to an exemplary embodiment, a retention time locking algorithm for liquid chromatography applications may be provided. Such a retention time locking may be achieved by applying a smart pumping technology. More particularly, gradient pumps may be calibrated to tune them for specific retention times.

In liquid chromatography, the performance is usually defined by characterizing reproducibility of results:
- Retention time: the run time at which a peak appears in the detector
- Peak area in [mAU x sec]: integrated absorbance signal from peak begin to end

In HPLC separations, it is an expectation to achieve a reproducibility of retention times in the sub-digit percent range. This leads to the requirement that all influential factors are controlled to an even better position. While the peak area may be the more easy aspect, in modern analytical applications problems are often the stability of the retention times, which is a risk for accuracy.

In reversed phase liquid chromatography, larger molecules such as proteins often exhibit a steep "adsorption isotherm" which generally means that minute changes in organic concentration may influence the retention times dramatically. This is often true even under isocratic elution conditions, or when premised solvents are in use.

For a given sample species, the retention times generally depend on column type and geometry, its temperature, the actual flow rate and the actual mobile phase composition. While the column type and geometry are in many cases pretty stable parameters, temperature, flow rate and solvent composition may show variance. This particularly holds for pumping systems which generate a solvent composition by delivering concurrently individual flows of for instance water and an organic component to the system.

On the side of the total flow rate through the system, a transfer function may be almost an 1/x relation which may result in a 1% shift in retention time for a 1% lower flow rate. If a retention time is expected in a 1% window with a total flow of 500 µl/minute, a leak rate of about 5 µl/minute can be accepted. But if the leak rate happens at a point in the system which is upstream from a mixing point, then there is an additional impact also on solvent composition. At an expected composition of for instance 15% B and 500 µl/minute, the same 5 µl/minute leak in the organic (for instance B) channel may shift the solvent composition down to almost 14% B. But in case of a steep "absorption isotherm" this may result easily in a 50% shift of retention time. This way the solvent composition may have a 50 times higher requirement to achieve the same position in the retention time.

For precise pumping actions, both in flow rate and in solvent composition, even in the leak free system, there may be a minute variance in unit to unit, day to day, day to night, or across a year performance. While in many cases these variations may be acceptable, especially with those sample substances exhibiting steep adsorption isotherms specifically composition accuracy is required at the level that is extreme. It may happen that all specifications are well met by the modules of an application, which make up the analytical system, but still the customer requirements are calling for more.

If compositional accuracy is required at a level of for instance 0.1% blended mix, it can be a solution to slightly tweak the programmed gradient. However, this is often not appropriate in practice in the hands of the customer, simply because the operator in the regulated environment usually is not allowed to modify a chromatographic method. The method may be denoted as a set of parameters, including the programmed time table for gradients, which defines the complete execution of an analytical run.

In order to meet the above boundary conditions, an exemplary embodiment of the invention supplies a function in the instrument which allows to run the original chromatographic method but still has capabilities to support this tweaking.

Because the net result of such a tweaking (if applied appropriately) is to ensure an LC peak, or a set of peaks, to be eluted at or near a specific requested retention time, the running procedure may be tweaked to adapt for variances of the separation column. Hence, retention locking for liquid chromatography applications may be implemented.

According to an exemplary embodiment, the instrument may hold a parameter, which may be usually set to zero, which may be added to the commanded composition (for instance % B) during operation (and the execution of the time table). Simply spoken it is an offset which may be added to the commanded composition from the method. While a simple form of the offset is a scalar value (a constant value added at all times), a more complex version can be a set of values (or a vector, or a set of vectors, a matrix, or a function) which gives the offset across a range like composition range or gradient run time.

A specific calibration routine may be implemented or a calculation script may be offered, to directly set a proposed value (or a set of values) based on the results from a previous separation run.

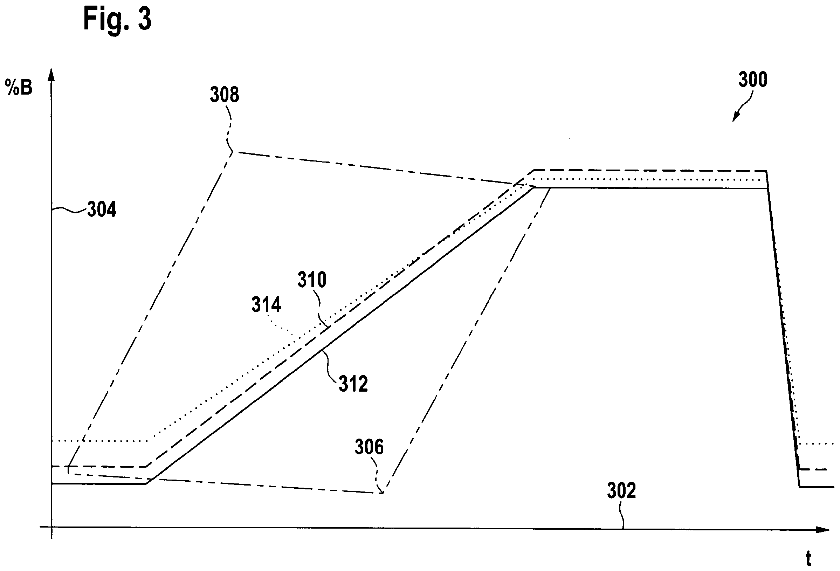

In the following, a diagram 300 shown in Fig. 3 will be explained which shows a general concept according to an exemplary embodiment.

Along an abscissa 302 of the diagram 300, a run time of a liquid chromatography experiment is plotted. Along an ordinate 304, the percentage of a solvent composition B (for instance a percentage of an organic solvent) is plotted. To clarify the curves in Fig. 3, it should be mentioned that Fig. 3 shows the effect amplified, usually the correction may be pretty minor in the illustrated scale. While the gradient may be run from 10% B to 65 % B, it is assumed that the offset introduced by retention time locking is in many cases in the range of +/- 0.3 % B.

It may be assumed that the retention time locking usually corrects for minor variations and solvent composition which may be the normal tolerance between instruments or within the dynamics of one instrument overtime, for instance day to day. If a substantial, say 10 % offset is applied then the risk may be higher that the system is no longer linear in resolution and even peaks may co-elute or even change elution order.

Fig. 3 shows a calibrated gradient elution to lock the retention time to a specific value. Reference numeral 306 shows a simple constant offset, the same across the entire run. Reference numeral 308 shows a dual point calibration which changes across the run. Reference numeral 310 denotes an expected or target curve. In order to approach this target curve 310 by a measurement, an actually obtained measurement curve 312 may be adjusted by adding the constant offset value, as denoted by reference numeral 306, to the experimental spectrum 312 to meet the theoretically expected spectrum 310. The more sophisticated dual point calibration changes the offset value along the spectrum, when the difference between a measurement spectrum 314 and the expected spectrum 310 changes over time. Hence, with a plurality of calibration points, i.e. in combination with an extrapolation or an interpolation computation, it may be possible to further refine the adjusting according to an exemplary embodiment.

**Fig. 4** shows a liquid chromatography system 400 according to an exemplary embodiment. In Fig. 4, the control unit 208 of Fig. 2 is shown without the separate blocks 202, 204, 206 which are depicted in Fig. 2.

The fixed chromatographic method is schematically shown with reference numeral 402 in Fig. 4. It comprises a sequence of steps (1., 2., 3., 4., ...) each of which being assigned with one or more parameters such as a solvent composition of 10 % A and 90 % B in a first procedure 1.

As can be taken from Fig. 4, fluidic pumps 404, 406 are provided as pumps with reciprocating pistons which mix the compositions A and B in accordance with a predefined mixing ratio. In dependence of a switching state of a fluidic switch 418, the system may operate with a first chromatographic column 408 or a second chromatographic column 410, depending on what is more appropriate in a present scenario. Each of the columns 408, 410 may be temperated using a dedicated temperature adjustment unit 422, 424. A wavelength detector 414 for a fluorescence detection of the fractions of the sample separated by the columns 408, 410 is shown as well. After detection in the wavelength detector 414, a waste 416 may collect the sample.

Furthermore, a temperature sensor 430, a pressure sensor 440 and the humidity sensor 450 are provided for measuring the respective ambient parameters in the fluidic system 400. The corresponding parameters are supplied to the control unit 208.

The control unit 208 may further receive the information from the wavelength detector 414 such as a chromatogram shown in Fig. 4 in a schematic way. In the shown configuration, an expected retention time t_{T} differs by Δ from an actual retention time t_{A} of a known species analyzed in the LC system 400. Consequently, the control unit 208 may adjust one or more of various operation properties of the LC device 400 to promote a method conform execution of the LC analysis. For instance, the drive power of the piston driven pumps 404, 406 may be adjusted to meet the composition ratio A:B of 10%:90% defined by the chromatographic method. A switching of a valve 420 may be controlled as well. One of the chromatographic columns 410, 408 may be selected by correspondingly operating the switch 418. By heating the columns 408, 410 using the temperature adjustment unit 422, 424, proper column operation may be adjusted. Also the wavelength of wavelength detector 414 may be adjusted.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A liquid chromatography device (200) being controllable for executing a chromatographic method (402) defined by a set of target parameters and by a corresponding target sequence of operation procedures, the device (200) comprising
a method execution unit (202) configured for executing the chromatographic method (402) by applying the set of target parameters and by running the corresponding target sequence of operation procedures within the liquid chromatography device (200);
a determining unit (204) configured for determining a deviation of an actual result of the chromatographic method (402) from an expected target result, wherein the expected target result of the chromatographic method (402) represents a desired behavior of the liquid chromatography device (200) and wherein the actual result of the chromatographic method (402) is obtained by executing the chromatographic method (402) and represents an actual behavior of the liquid chromatography device (200);
an adjusting unit (206) configured for adjusting at least one operation property of the liquid chromatography device (200) based on the determined deviation to thereby at least partially compensate a difference between the expected target result and the actual result while maintaining the chromatographic method (402) unchanged;
wherein the method execution unit (202) is configured for executing the chromatographic method (402) on the liquid chromatography device (200) using a predefined reference sample;
wherein the determining unit (204) is configured for determining a deviation of an expected position and an actual position of an analysis peak of the reference sample in a chromatogram;
wherein the adjusting unit (206) is configured for adjusting the at least one operation property, comprising a fluid flow of a solvent composition, to lock the actual position at the expected position;
the adjusting unit (206) is configured for adjusting an actual composition of a mobile phase composed of multiple fluidic components so that the adjusted composition is in accordance with at least one of the target parameters of the unchanged chromatographic method (402).

2. The liquid chromatography device (200) of claim 1, comprising at least one of the following features:
the adjusting unit (206) is configured for adjusting an actual composition of a mobile phase composed by multiple fluidic components based on the determined deviation to thereby at least partially compensate the difference between the expected target result and the actual result;
the adjusting unit (206) is configured for adjusting an actual composition of a mobile phase composed of multiple fluidic components so that the adjustment of the composition is in accordance with at least a part of the target sequence of operation procedures of the unchanged chromatographic method (402);
the adjusting unit (206) is configured for individually adjusting operation, particularly piston operation, of multiple fluid pumps (404, 406), each configured for pumping an assigned one of multiple fluidic components of a mobile phase, to thereby adjust the composition of the mobile phase in accordance with the unchanged chromatographic method (402);
the chromatographic method (402) is a fixed chromatographic method (402);
the expected target result corresponds to a result obtained upon execution of the chromatographic method (402) under predefined standard conditions;
the actual result corresponds to a result obtained upon execution of the chromatographic method (402) under actual experimental conditions differing from predefined standard conditions;
the expected target result corresponds to a result obtained upon execution of the chromatographic method (402) under predefined standard conditions, wherein the conditions comprise at least one of the group consisting of an environmental temperature, an environmental pressure, an environmental humidity, a leakage behaviour of the liquid chromatography device (200), a characteristic of forming a composition of multiple fluidic components, and a solvent composition;
the determining unit (204) is configured for determining the deviation resulting from a discrepancy between actual environmental conditions and predefined standard environmental conditions;
the adjusting unit (206) is configured for adjusting the at least one operation property of the liquid chromatography device (200) for mapping the chromatographic method (402), relating to predefined standard environmental conditions, onto actual environmental conditions;
the adjusting unit (206) is configured for adjusting the at least one operation property of the liquid chromatography device (200) so as to render an actual result obtained upon execution of the chromatographic method (402) independent of a change of actual environmental conditions;
the at least one operation property of the liquid chromatography device (200) comprises at least one of the group consisting of an adjustable temperature of a separation column (408, 410), an adjustable type of a separation column (408, 410) implemented in the liquid chromatography device (200), an adjustable pumping rate of a movable phase drive (404, 406), an adjustable fluidic flow for solvent composition of a mobile phase, and an adjustable analysis procedure for identifying measurement peaks in a chromatographic spectrum;
none of the at least one operation property forms part of the chromatographic method (402) defined by the set of target parameters and by the corresponding target sequence of operation procedures.

3. The liquid chromatography device (200) of claim 1 or 2, comprising at least one of the following features:
the adjusting unit (206) is configured for adjusting the at least one operation property to lock the actual position at the expected position in one or more of following runs;
a position in the chromatogram corresponds to a chromatographic retention time;
the adjusting unit (206) is configured for locking the actual position at the expected position by applying at least one re-scaling parameter as the at least one operation property to the actual position;
the adjusting unit (206) is configured for adjusting the at least one operation property under consideration of an adsorption isotherm;
the adjusting unit (206) is configured for adjusting at least one experimental operation condition of the liquid chromatography device (200) as the at least one operation property to lock the actual position at the expected position.

4. The liquid chromatography device (200) of claim 1 or any one of the above claims,
wherein the adjusting unit (206) is configured for adjusting an elution force of the liquid chromatography device (200) to achieve conformity with the chromatographic method (402).

5. The liquid chromatography device (200) of claim 1 or any one of the above claims,
wherein the adjusting unit (206) is configured for calibrating the liquid chromatography device (200) so that when actually executing the chromatographic method (402), actual parameters are in accordance with the target parameters and an actual target sequence of operation procedures is in accordance with the target sequence of operation procedures.

6. The liquid chromatography device (200) of claim 1 or any one of the above claims,
configured for calibrating the liquid chromatography device (200) in an iterative manner.

7. The liquid chromatography device (200) of claim 1 or any one of the above claims,
configured for calibrating the liquid chromatography device (200) by at least one of an extrapolation and an interpolation in a measurement spectrum.

8. The liquid chromatography device (200) of claim 1 or any one of the above claims,
wherein the chromatographic method (402) is a certified method.

9. The liquid chromatography device (200) of claim 1 or any one of the above claims,
wherein the set of target parameters define numerical values according to which the corresponding target sequence of operation procedures is to be carried out.

10. The liquid chromatography device (200) of claim 1 or any one of the above claims,
wherein the target sequence of operation procedures defines a procedure of treating fluids by the liquid chromatography device (200).

11. The liquid chromatography device (200) of the preceding claim,
wherein the target sequence of operation procedures defines at least one of the group consisting of a procedure of separating different components of fluids, a procedure of analyzing a medication, a procedure of analyzing a biological sample, a procedure of mixing various fluids, a diagnostic procedure, a procedure requiring official approval, a procedure requiring official certification, a procedure of flushing the liquid chromatography device (200), a selection of a solvent, a procedure of applying a concentration gradient, and a selection of an operation temperature.

12. The liquid chromatography device (200) of claim 1 or any one of the above claims,
wherein the liquid chromatography device (200) is an HPLC device.

13. A process of operating a liquid chromatography device (200), the liquid chromatography device (200) being programmed for executing a chromatographic method (402) defined by a set of target parameters and by a corresponding target sequence of operation procedures, the process comprising:
executing the chromatographic method (402) by applying the set of target parameters and by running the corresponding target sequence of operation procedures within the liquid chromatography device (200);
determining a deviation of an actual result of the chromatographic method (402) from an expected target result, wherein the expected target result of the chromatographic method (402) represents a desired behavior of the liquid chromatography device (200) and the actual result of the chromatographic method (402) is obtained by executing the chromatographic method (402) and represents an actual behavior of the liquid chromatography device (200);
adjusting, particularly for at least one or more following runs, at least one operation property of the liquid chromatography device (200) based on the determined deviation to thereby at least partially compensate a difference between the expected target result and the actual result while maintaining the chromatographic method (402) unchanged;
wherein the chromatographic method (402) is executed on the liquid chromatography device (200) using a predefined reference sample;
wherein a deviation of an expected position and an actual position of an analysis peak of the reference sample is determined in a chromatogram;
wherein the at least one operation property, comprising a fluid flow of a solvent composition, is adjusted to lock the actual position at the expected position;
wherein an actual composition of a mobile phase composed of multiple fluidic components is adjusted so that the adjusted composition is in accordance with at least one of the target parameters of the unchanged chromatographic method.

14. A software program preferably stored on a data carrier, for controlling or executing the process of the preceding claim, when run on a data processing system such as a computer.

## Patentansprüche

1. Eine Flüssigkeitschromatographie Vorrichtung (200), welche steuerbar ist zum Ausführen eines Chromatographieverfahrens (402), welches mittels eines Satzes von Zielparametern und mittels einer korrespondierenden Zielsequenz von Betriebsvorgängen definiert ist, wobei die Vorrichtung (200) aufweist
eine Verfahren Ausführeinheit (202), welche konfiguriert ist zum Ausführen des Chromatographieverfahrens (402) mittels Anwendens des Satzes von Zielparametern und mittels Durchführens der Zielsequenz von Betriebsvorgängen in der Flüssigkeitschromatographie Vorrichtung (200);
eine Bestimmungseinheit (204), welche konfiguriert ist zum Bestimmen einer Abweichung eines tatsächlichen Ergebnisses des Chromatographieverfahrens (402) von einem erwarteten Zielergebnis, wobei das erwartete Zielergebnis des Chromatographieverfahrens (402) ein erwünschtes Verhalten der Flüssigkeitschromatographie Vorrichtung (200) repräsentiert, und wobei das tatsächliche Ergebnis des Chromatographieverfahrens (402) mittels eines Ausführens des Chromatographieverfahrens (402) erhalten wird und ein tatsächliches Verhalten der Flüssigkeitschromatographie Vorrichtung (200) repräsentiert;
eine Einstellungseinheit (206), welche konfiguriert ist zum Einstellen von zumindest einer Betriebseigenschaft der Flüssigkeitschromatographie Vorrichtung (200) basierend auf der bestimmten Abweichung, um dadurch zumindest teilweise eine Differenz zwischen dem erwarteten Zielergebnis und dem tatsächlichen Ergebnis zu kompensieren, während das Chromatographieverfahren (402) unverändert aufrechterhalten wird;
wobei die Verfahren Ausführeinheit (202) konfiguriert ist zum Ausführen des Chromatographieverfahrens (402) auf der Flüssigkeitschromatographie Vorrichtung (200) unter Verwendung einer vordefinierten Referenzprobe;
wobei die Bestimmungseinheit (204) konfiguriert ist zum Bestimmen einer Abweichung einer erwarteten Position und einer tatsächlichen Position eines Analysepeaks der Referenzprobe in einem Chromatogramm;
wobei die Einstellungseinheit (206) konfiguriert ist zum Einstellen der zumindest einen Betriebseigenschaft, aufweisend einen Fluidstrom einer Lösungsmittelzusammensetzung, um die tatsächliche Position an der erwarteten Position zu sichern;
wobei die Einstellungseinheit (206) konfiguriert ist zum Einstellen einer tatsächlichen Zusammensetzung einer mobilen Phase, welche aus mehreren fluidischen Komponenten besteht, so dass die eingestellte Zusammensetzung in Übereinstimmung mit zumindest einem der Zielparameter des unveränderten Chromatographieverfahrens (402) ist.

2. Die Flüssigkeitschromatographie Vorrichtung (200) gemäß Anspruch 1, aufweisend zumindest eines der folgenden Merkmale:
die Einstellungseinheit (206) ist konfiguriert zum Einstellen einer tatsächlichen Zusammensetzung einer mobilen Phase, welche aus mehreren fluidischen Komponenten besteht, basierend auf der bestimmten Abweichung, um dadurch zumindest teilweise die Differenz zwischen dem erwarteten Zielergebnis und dem tatsächlichen Ergebnis zu kompensieren;
die Einstellungseinheit (206) ist konfiguriert zum Einstellen einer tatsächlichen Zusammensetzung einer mobilen Phase, welche aus mehreren fluidischen Komponenten besteht, derartig, dass die Einstellung der Zusammensetzung in Übereinstimmung mit zumindest einem Teil der Zielsequenz der Betriebsvorgänge des unveränderten chromatographischen Verfahrens (402) ist;
die Einstellungseinheit (206) ist konfiguriert zum individuellen Einstellen des Betriebs, insbesondere eines Kolbenbetriebs, von mehreren Fluidpumpen (404, 406), wobei jede konfiguriert ist zum Pumpen einer zugeordneten von mehreren fluidischen Komponenten einer mobilen Phase, um dadurch die Zusammensetzung der mobilen Phase in Übereinstimmung mit dem unveränderten chromatographischen Verfahren (402) einzustellen;
das chromatographische Verfahren (402) ist ein festgelegtes chromatographisches Verfahren (402);
das erwartete Zielergebnis korrespondiert zu einem Ergebnis, welches auf ein Ausführen des chromatographischen Verfahrens (402) unter vordefinierten Standardbedingungen hin erhalten wird;
das tatsächliche Ergebnis korrespondiert zu einem Ergebnis, welches auf ein Ausführen des chromatographischen Verfahrens (402) unter tatsächlichen experimentellen Bedingungen hin erhalten wird, welche sich von vordefinierten Standardbedingungen unterscheiden;
das erwartete Zielergebnis korrespondiert zu einem Ergebnis, welches auf ein Ausführen des chromatographischen Verfahrens (402) unter vordefinierten Standardbedingungen hin erhalten wird, wobei die Bedingungen zumindest eines aus der Gruppe aufweisen, bestehend aus einer Umgebungstemperatur, einem Umgebungsdruck, einer Umgebungsfeuchtigkeit, einem Leckverhalten der Flüssigkeitschromatographie Vorrichtung (200), einer Eigenschaft zum Bilden einer Zusammensetzung von mehreren fluidischen Komponenten, und einer Lösungsmittelzusammensetzung;
die Bestimmungseinheit (204) ist konfiguriert zum Bestimmen der Abweichung, welche aus einer Diskrepanz zwischen tatsächlichen Umgebungsbedingungen und vordefinierten Standard Umgebungsbedingungen resultiert;
die Einstellungseinheit (206) ist konfiguriert zum Einstellen der zumindest einen Betriebseigenschaft der Flüssigkeitschromatographie Vorrichtung (200) zum Mapping des chromatographischen Verfahrens (402), bezogen auf Standard Umgebungsbedingungen, auf tatsächliche Umgebungsbedingungen;
die Einstellungseinheit (206) ist konfiguriert zum Einstellen der zumindest einen Betriebseigenschaft der Flüssigkeitschromatographie Vorrichtung (200), um ein tatsächliches Ergebnis, welches auf das Ausführen des chromatographischen Verfahrens (402) hin erhalten wird, unabhängig von einer Änderung von tatsächlichen Umgebungsbedingungen zu machen;
die zumindest eine Betriebseigenschaft der Flüssigkeitschromatographie Vorrichtung (200) weist zumindest eines aus der Gruppe auf, bestehend aus einer einstellbaren Temperatur einer Trennsäule (408, 410), einem einstellbaren Typ einer Trennsäule (408, 410), welche in der Flüssigkeitschromatographie Vorrichtung (200) implementiert ist, einer einstellbaren Pumprate eines beweglichen Phasenantriebs (404, 406), einem einstellbaren fluidischen Strom für die Lösungsmittelzusammensetzung einer mobilen Phase, und einem einstellbaren Analyseverfahren zum Identifizieren von Messpeaks in einem Chromatographiespektrum;
keine der zumindest einen Betriebseigenschaft bildet einen Teil des chromatographischen Verfahrens (402), welches mittels des Satzes von Zielparametern und mittels der korrespondierenden Zielsequenz von Betriebsvorgängen definiert ist.

3. Die Flüssigkeitschromatographie Vorrichtung (200) gemäß Anspruch 1 oder 2, aufweisend zumindest eines der folgenden Merkmale:
die Einstellungseinheit (206) ist konfiguriert zum Einstellen der zumindest einen Betriebseigenschaft, um die tatsächliche Position an der erwarteten Position in einem oder mehreren von folgenden Durchläufen zu sichern;
eine Position in dem Chromatogramm korrespondiert zu einer chromatographischen Retentionszeit;
die Einstellungseinheit (206) ist konfiguriert zum Sichern der tatsächlichen Position an der erwarteten Position mittels Anwendens von zumindest einem neu-Skalierungsparameter, wie die zumindest eine Betriebseigenschaft, auf die tatsächliche Position;
die Einstellungseinheit (206) ist konfiguriert zum Einstellen der zumindest einen Betriebseigenschaft unter Berücksichtigung einer Adsorptionsisothermen;
die Einstellungseinheit (206) ist konfiguriert zum Einstellen der zumindest einen experimentellen Betriebsbedingung der Flüssigkeitschromatographie Vorrichtung (200), wie der zumindest eine Betriebsbedingung, zum Sichern der tatsächlichen Position an der erwarteten Position.

4. Die Flüssigkeitschromatographie Vorrichtung (200) gemäß Anspruch 1 oder irgendeinem der vorangehenden Ansprüche,
wobei die Einstellungseinheit (206) konfiguriert ist zum Einstellen einer Elutionskraft der Flüssigkeitschromatographie Vorrichtung (200), um eine Konformität mit dem chromatographischen Verfahren (402) zu erreichen.

5. Die Flüssigkeitschromatographie Vorrichtung (200) gemäß Anspruch 1 oder irgendeinem der vorangehenden Ansprüche,
wobei die Einstellungseinheit (206) konfiguriert ist zum Kalibrieren der Flüssigkeitschromatographie Vorrichtung (200), so dass, wenn das chromatographische Verfahren (402) tatsächlich durchgeführt wird, die tatsächlichen Parameter in Übereinstimmung mit den Zielparametern sind und eine tatsächliche Zielsequenz der Betriebsvorgänge in Übereinstimmung mit der Zielsequenz der Betriebsvorgänge ist.

6. Die Flüssigkeitschromatographie Vorrichtung (200) gemäß Anspruch 1 oder irgendeinem der vorangehenden Ansprüche,
konfiguriert zum Kalibrieren der Flüssigkeitschromatographie Vorrichtung (200) in einer iterativen Weise.

7. Die Flüssigkeitschromatographie Vorrichtung (200) gemäß Anspruch 1 oder irgendeinem der vorangehenden Ansprüche,
konfiguriert zum Kalibrieren der Flüssigkeitschromatographie Vorrichtung (200) mittels zumindest einer von einer Extrapolation und einer Interpolation in einem Messspektrum.

8. Die Flüssigkeitschromatographie Vorrichtung (200) gemäß Anspruch 1 oder irgendeinem der vorangehenden Ansprüche,
wobei das chromatographische Verfahren (402) ein zertifiziertes Verfahren ist.

9. Die Flüssigkeitschromatographie Vorrichtung (200) gemäß Anspruch 1 oder irgendeinem der vorangehenden Ansprüche,
wobei der Satz von Zielparametern numerische Werte definiert, gemäß welchen die korrespondierende Zielsequenz von Betriebsvorgängen auszuführen ist.

10. Die Flüssigkeitschromatographie Vorrichtung (200) gemäß Anspruch 1 oder irgendeinem der vorangehenden Ansprüche,
wobei die Zielsequenz von Betriebsvorgängen einen Vorgang zum Behandeln von Fluiden mittels der Flüssigkeitschromatographie Vorrichtung (200) definiert.

11. Die Flüssigkeitschromatographie Vorrichtung (200) gemäß dem vorangehenden Anspruch,
wobei die Zielsequenz von Betriebsvorgängen zumindest eines aus der Gruppe definiert, bestehend aus einem Vorgang zum Trennen verschiedener Komponenten von Fluiden, einem Vorgang zum Analysieren einer Medikation, einem Diagnosevorgang, einem Vorgang, welcher eine amtliche Zulassung erfordert, einem Vorgang, welcher eine amtliche Zertifizierung erfordert, einem Vorgang zum Spülen der Flüssigkeitschromatographie Vorrichtung (200), einer Auswahl eines Lösungsmittels, einem Vorgang zum Anwenden eines Konzentrationsgradienten, und einer Auswahl einer Betriebstemperatur.

12. Die Flüssigkeitschromatographie Vorrichtung (200) gemäß Anspruch 1 oder irgendeinem der vorangehenden Ansprüche,
wobei die Flüssigkeitschromatographie Vorrichtung (200) eine HPLC Vorrichtung ist.

13. Ein Verfahren zum Betreiben einer Flüssigkeitschromatographie Vorrichtung (200), wobei die Flüssigkeitschromatographie Vorrichtung (200) programmiert ist zum Ausführen eines chromatographischen Verfahrens (402), welches mittels eines Satzes von Zielparametern und mittels einer korrespondierenden Zielsequenz von Betriebsvorgängen definiert ist, wobei das Verfahren aufweist:
Ausführen des chromatographischen Verfahrens (402) mittels Anwendens des Satzes von Zielparametern und mittels Ausführens der korrespondierenden Zielsequenz von Betriebsvorgängen in der Flüssigkeitschromatographie Vorrichtung (200);
Bestimmen einer Abweichung eines tatsächlichen Ergebnisses des chromatographischen Verfahrens (402) von einem erwarteten Zielergebnis, wobei das erwartete Zielergebnis des chromatographischen Verfahrens (402) ein erwünschtes Verhalten der Flüssigkeitschromatographie Vorrichtung (200) repräsentiert, und das tatsächliche Ergebnis des chromatographischen Verfahrens (402) mittels Ausführens des chromatographischen Verfahrens (402) erhalten wird und ein tatsächliches Verhalten der Flüssigkeitschromatographie Vorrichtung (200) repräsentiert;
Einstellen, insbesondere für zumindest einen oder mehrere folgende Durchläufe, zumindest einer Betriebseigenschaft der Flüssigkeitschromatographie Vorrichtung (200) basierend auf der bestimmten Abweichung, um dadurch zumindest teilweise eine Differenz zwischen dem erwarteten Zielergebnis und dem tatsächlichen Ergebnis zu kompensieren, während das chromatographische Verfahren (402) unverändert aufrechterhalten wird;
wobei das chromatographische Verfahren (402) auf der Flüssigkeitschromatographie Vorrichtung (200) unter Verwendung einer vordefinierten Referenzprobe durchgeführt wird;
wobei eine Abweichung einer erwarteten Position und einer tatsächlichen Position eines Analysepeaks der Referenzprobe in einem Chromatogramm bestimmt wird;
wobei die zumindest eine Betriebseigenschaft, aufweisend einen Fluidstrom einer Lösungsmittelzusammensetzung, eingestellt wird, um die tatsächliche Position an der erwarteten Position zu sichern;
wobei eine tatsächliche Zusammensetzung einer mobilen Phase, welche aus mehreren fluidischen Komponenten besteht, derartig eingestellt wird, dass die eingestellte Zusammensetzung in Übereinstimmung mit zumindest einem der Zielparameter des unveränderten chromatographischen Verfahrens ist.

14. Ein Softwareprogramm, bevorzugt auf einem Datenträger gespeichert, zum Steuern oder Ausführen des Verfahrens des vorangehenden Anspruchs, wenn es auf einem Datenverarbeitungssystem, z.B. einem Computer, ausgeführt wird.

## Revendications

1. Dispositif de chromatographie liquide (200) commandable pour exécuter un procédé chromatographique (402) défini par un ensemble de paramètres cibles et par une séquence cible correspondante de procédures d'exploitation, le dispositif (200) comprenant
une unité d'exécution de procédé (202) configurée pour exécuter le procédé chromatographique (402) en appliquant l'ensemble de paramètres cibles et en exécutant la séquence cible correspondante de procédures d'exploitation au sein du dispositif de chromatographie liquide (200) ;
une unité de détermination (204) configurée pour déterminer un écart d'un résultat réel du procédé chromatographique (402) par rapport à un résultat cible attendu, dans lequel le résultat cible attendu du procédé chromatographique (402) représente un comportement souhaité du dispositif de chromatographie liquide (200) et dans lequel le résultat réel du procédé chromatographique (402) est obtenu en exécutant le procédé chromatographique (402) et représente un comportement réel du dispositif de chromatographie liquide (200) ;
une unité d'ajustement (206) configurée pour ajuster au moins une propriété d'exploitation du dispositif de chromatographie liquide (200) sur la base de l'écart déterminé pour ainsi au moins partiellement compenser une différence entre le résultat cible attendu et le résultat réel tout en conservant le procédé chromatographique (402) inchangé ;
dans lequel l'unité d'exécution de procédé (202) est configurée pour exécuter le procédé chromatographique (402) sur le dispositif de chromatographie liquide (200) à l'aide d'un échantillon de référence prédéfini ;
dans lequel l'unité de détermination (204) est configurée pour déterminer un écart d'une position attendue et une position réelle d'un pic d'analyse de l'échantillon de référence dans un chromatogramme ;
dans lequel l'unité d'ajustement (206) est configurée pour ajuster l'au moins une propriété d'exploitation, comprenant un écoulement de fluide d'une composition de solvant, pour verrouiller la position réelle à la position attendue ;
l'unité d'ajustement (206) est configurée pour ajuster une composition réelle d'une phase mobile composée de composants fluidiques multiples de sorte que la composition ajustée soit conforme à au moins l'un des paramètres cibles du procédé chromatographique (402) inchangé.

2. Dispositif de chromatographie liquide (200) selon la revendication 1, comprenant au moins l'une des particularités suivantes :
l'unité d'ajustement (206) est configurée pour ajuster une composition réelle d'une phase mobile composée de composants fluidiques multiples sur la base de l'écart déterminé pour ainsi au moins partiellement compenser la différence entre le résultat cible attendu et le résultat réel ;
l'unité d'ajustement (206) est configurée pour ajuster une composition réelle d'une phase mobile composée de composants fluidiques multiples de sorte que l'ajustement de la composition soit conforme à au moins une partie de la séquence cible de procédures d'exploitation du procédé chromatographique (402) inchangé ;
l'unité d'ajustement (206) est configurée pour ajuster individuellement l'exploitation, notamment l'exploitation de piston, de pompes à fluide (404, 406) multiples, chacune étant configurée pour pomper un composant attribué parmi des composants fluidiques multiples d'une phase mobile, pour ainsi ajuster la composition de la phase mobile conformément au procédé chromatographique (402) inchangé ;
le procédé chromatographique (402) est un procédé chromatographique (402) fixe ;
le résultat cible attendu correspond à un résultat obtenu lors de l'exécution du procédé chromatographique (402) dans des conditions types prédéfinies ;
le résultat réel correspond à un résultat obtenu lors de l'exécution du procédé chromatographique (402) dans des conditions expérimentales réelles différant de conditions types prédéfinies ;
le résultat cible attendu correspond à un résultat obtenu lors de l'exécution du procédé chromatographique (402) dans des conditions types prédéfinies, dans lequel les conditions comprennent au moins l'un du groupe constitué d'une température ambiante, une pression ambiante, une humidité ambiante, un comportement de fuite du dispositif de chromatographie liquide (200), une caractéristique de formation d'une composition de composants fluidiques multiples, et une composition de solvant ;
l'unité de détermination (204) est configurée pour déterminer l'écart résultant d'une divergence entre des conditions ambiantes réelles et des conditions ambiantes types prédéfinies ;
l'unité d'ajustement (206) est configurée pour ajuster l'au moins une propriété d'exploitation du dispositif de chromatographie liquide (200) pour établir une correspondance du procédé chromatographique (402), en rapport à des conditions ambiantes types prédéfinies, sur des conditions ambiantes réelles ;
l'unité d'ajustement (206) est configurée pour ajuster l'au moins une propriété d'exploitation du dispositif de chromatographie liquide (200) de façon à rendre un résultat réel obtenu lors de l'exécution du procédé chromatographique (402) indépendant d'un changement de conditions ambiantes réelles ;
l'au moins une propriété d'exploitation du dispositif de chromatographie liquide (200) comprend au moins un élément du groupe constitué d'une température ajustable d'une colonne de séparation (408, 410), un type ajustable d'une colonne de séparation (408, 410) mise en oeuvre dans le dispositif de chromatographie liquide (200), une vitesse de pompage ajustable d'un entraînement de phase mobile (404, 406), un écoulement fluidique ajustable pour une composition de solvant d'une phase mobile, et une procédure d'analyse ajustable pour identifier des pics de mesure dans un spectre chromatographique ;
aucune de l'au moins une propriété d'exploitation ne fait partie du procédé chromatographique (402) défini par l'ensemble de paramètres cibles et par la séquence cible correspondante de procédures d'exploitation.

3. Dispositif de chromatographie liquide (200) selon la revendication 1 ou 2, comprenant au moins l'une des particularités suivantes :
l'unité d'ajustement (206) est configurée pour ajuster l'au moins une propriété d'exploitation pour verrouiller la position réelle à la position attendue dans une ou plusieurs de campagnes suivantes ;
une position dans le chromatogramme correspond à un temps de rétention chromatographique ;
l'unité d'ajustement (206) est configurée pour verrouiller la position actuelle à la position attendue en appliquant au moins un paramètre de ré-échelonnage en tant que l'au moins une propriété d'exploitation à la position réelle ;
l'unité d'ajustement (206) est configurée pour ajuster l'au moins une propriété d'exploitation compte tenu d'une isotherme d'adsorption ;
l'unité d'ajustement (206) est configurée pour ajuster l'au moins une condition d'exploitation expérimentale du dispositif de chromatographie liquide (200) en tant que l'au moins une propriété d'exploitation pour verrouiller la position réelle à la position attendue.

4. Dispositif de chromatographie liquide (200) selon la revendication 1 ou l'une quelconque des revendications précédentes,
dans lequel l'unité d'ajustement (206) est configurée pour ajuster une force d'élution du dispositif de chromatographie liquide (200) pour parvenir à une conformité avec le procédé chromatographique (402).

5. Dispositif de chromatographie liquide (200) selon la revendication 1 ou l'une quelconque des revendications précédentes,
dans lequel l'unité d'ajustement (206) est configurée pour étalonner le dispositif de chromatographie liquide (200) de sorte que, lorsqu'il exécute réellement le procédé chromatographique (402), des paramètres réels sont conformes aux paramètres cibles et une séquence cible réelle de procédures d'exploitation est conforme à la séquence cible de procédures d'exploitation.

6. Dispositif de chromatographie liquide (200) selon la revendication 1 ou l'une quelconque des revendications précédentes,
configuré pour étalonner le dispositif de chromatographie liquide (200) de manière itérative.

7. Dispositif de chromatographie liquide (200) selon la revendication 1 ou l'une quelconque des revendications précédentes,
configuré pour étalonner le dispositif de chromatographie liquide (200) par au moins l'une d'une extrapolation et d'une interpolation dans un spectre de mesure.

8. Dispositif de chromatographie liquide (200) selon la revendication 1 ou l'une quelconque des revendications précédentes,
dans lequel le procédé chromatographique (402) est un procédé certifié.

9. Dispositif de chromatographie liquide (200) selon la revendication 1 ou l'une quelconque des revendications précédentes,
dans lequel l'ensemble de paramètres cibles définit des valeurs numériques selon lesquelles la séquence cible correspondante de procédures d'exploitation doit être réalisée.

10. Dispositif de chromatographie liquide (200) selon la revendication 1 ou l'une quelconque des revendications précédentes,
dans lequel la séquence cible de procédures d'exploitation définit une procédure de traitement de fluides par le dispositif de chromatographie liquide (200).

11. Dispositif de chromatographie liquide (200) selon la revendication précédente,
dans lequel la séquence cible de procédures d'exploitation définit au moins l'un du groupe constitué d'une procédure de séparation de composants différents de fluides, une procédure d'analyse d'un médicament, une procédure d'analyse d'un échantillon biologique, une procédure de mélange de divers fluides, une procédure de diagnostic, une procédure requérant une homologation officielle, une procédure requérant une certification officielle, une procédure de purge du dispositif de chromatographie liquide (200), une sélection d'un solvant, une procédure d'application d'un gradient de concentration, et une sélection d'une température d'exploitation.

12. Dispositif de chromatographie liquide (200) selon la revendication 1 ou l'une quelconque des revendications précédentes,
dans lequel le dispositif de chromatographie liquide (200) est un dispositif HPLC.

13. Processus d'exploitation d'un dispositif de chromatographie liquide (200), le dispositif de chromatographie liquide (200) étant programmé pour exécuter un procédé chromatographique (402) défini par un ensemble de paramètres cibles et par une séquence cible correspondante de procédures d'exploitation, le processus comprenant :
l'exécution du procédé chromatographique (402), en appliquant l'ensemble de paramètres cibles et en exécutant la séquence cible correspondante de procédures d'exploitation au sein du dispositif de chromatographie liquide (200) ;
la détermination d'un écart d'un résultat réel du procédé chromatographique (402) par rapport à un résultat cible attendu, dans lequel le résultat cible attendu du procédé chromatographique (402) représente un comportement souhaité du dispositif de chromatographie liquide (200) et le résultat réel du procédé chromatographique (402) est obtenu en exécutant le procédé chromatographique (402) et représente un comportement réel du dispositif de chromatographie liquide (200) ;
l'ajustement, notamment pour une ou plusieurs campagnes suivantes, d'au moins une propriété d'exploitation du dispositif de chromatographie liquide (200) sur la base de l'écart déterminé pour ainsi au moins partiellement compenser une différence entre le résultat cible attendu et le résultat réel tout en conservant le procédé chromatographique (402) inchangé ;
dans lequel le procédé chromatographique (402) est exécuté sur le dispositif de chromatographie liquide (200) à l'aide d'un échantillon de référence prédéfini ;
dans lequel un écart d'une position attendue et une position réelle d'un pic d'analyse de l'échantillon de référence est déterminé dans un chromatogramme ;
dans lequel l'au moins une propriété d'exploitation, comprenant un écoulement de fluide d'une composition de solvant, est ajustée pour verrouiller la position réelle à la position attendue ;
dans lequel une composition réelle d'une phase mobile composée de composants fluidiques multiples est ajustée de sorte que la composition ajustée soit conforme à au moins l'un des paramètres cibles du procédé chromatographique inchangé.

14. Programme logiciel stocké de préférence sur un support de données, pour commander ou exécuter le processus de la revendication précédente, lorsqu'il est exécuté sur un système de traitement de données tel qu'un ordinateur.
